# EUROPEAN PATENT APPLICATION

(11) **EP 3 582 315 A1**
(43) Date of publication of application: **18.12.2019**
(21) Application number: 17891994.0
(22) Date of filing: 11.01.2017
(51) Int. Cl.: H01M 10/052, H01G 11/06, H01G 11/42, H01G 11/52, H01G 11/62, H01M 4/36, H01M 4/62, H01M 10/0567, H01M 10/0568

(54) **ELECTROCHEMICAL DEVICE**

(71) Applicant: Sei Corporation, Tsu-shi, Mie 514-1118 (JP)
(72) Inventor: SAWAI, Takehiko, Tsu-shi Mie 514-1118 (JP); SAITO, Shinji, Tsu-shi Mie 514-1118 (JP); URAO, Kazunori, Tsu-shi Mie 514-1118 (JP)
(74) Representative: White, Duncan Rohan
(86) International application number: PCT/JP2017/000650
(87) International publication number: WO 2018/131094

(57) **Abstract**

The present invention provides a lithium secondary battery for an ISS dischargeable at not less than 15 ItA when the temperature is -30 degrees centigrade and chargeable at not less than 50 ItA. The present invention also provides an electrochemical device in which (1) a pressure of 0.3 kgf/cm² to 1.1 kgf/cm² is applied to a main surface of an electrode group including positive and negative electrodes, (2) a positive electrode material consists of a mixture of lithium-containing compound particles whose surfaces are coated with an amorphous carbon material and a conductive carbon material in which the surface carbon atoms thereof are chemically bonded to one another, (3) a negative electrode material contains at least one kind of particles selected from among graphite particles having a specific surface area of not less than 5 m²/g and soft carbon particles, (4) a metal foil has a plurality of through-holes, formed therethrough, each having a projected portion on at least one surface thereof, (5) an organic electrolytic solution is a mixed electrolyte containing lithium hexafluorophosphate and lithium bis(fluorosulfonyl)imide, and (6) a separator is made of paper obtained by paper-making after beating regenerated cellulose fiber.

## Description

### TECHNICAL FIELD

The present invention relates to an electrochemical device and particularly to a lithium secondary battery or a lithium ion capacitor to be used as a power supply to replace a lead acid battery for an engine starter to be used for an idling stop system.

### BACKGROUND ART

In recent years, an electrochemical device represented by a lithium secondary battery and a lithium ion capacitor has been developed for on-vehicle use and the performance of the device at a normal operation at room temperature is becoming satisfactory for on-vehicle use. In contrast, the performance in severe use such as a low-temperature operation, a quick charging, or a durability for mounting a device, that is, a long service life has become a problem. Among those, a method of applying a predetermined pressure to a main surface of an electrode group of an electrochemical device as a method aiming at achieving a quick charging performance or a long service life by retaining low resistance, is known (patent document 1). The lithium secondary battery to be used for the idling stop system or a stop and go system (hereinafter referred to as ISS) is required to be discharged at a large current not less than 15 ItA to enable an engine to be operated in the vicinity of -30 degrees centigrade. The performance of the lithium secondary battery is inferior to that of the lead acid battery in this respect. The lithium secondary battery is also required to be charged regeneratively at a large current not less than 50 ItA at a braking time. It is difficult for the lead acid battery to have this performance. To achieve these objects, the following items (1) and (2) are considered: item (1): to decrease a battery resistance and item (2): to prevent precipitation of metallic lithium in an intercalation reaction of lithium ions at the negative electrode of the battery.

Regarding the item (1), there are proposals to thin positive and negative electrodes and decrease the electrode resistances by applying carbon to the surface of the aluminum current collection foil (patent document 2). There is another proposal to decrease the resistance by increasing the amount of conductive materials inside the electrodes. According to still another proposal to decrease the battery resistance, the thickness of the separator and the diameters of pores are controlled. Regarding the item (2), there is a proposal to increase the reaction area by decreasing the diameters of particles of the active substance of the positive electrode and that of the negative electrode so as to decrease the densities of charging and discharging currents. According to another proposal, to alter the active substance of the negative electrode from a graphite material to the amorphous carbon material or to lithium titanate is examined.

In the known lithium secondary battery, the positive electrode material consists of the carbon-coated olivine-type lithium metal phosphorous oxide having at least one phase selected from among the graphene phase and the amorphous phase on at least the surface thereof. The surface phase of the carbon-coated olivine-type lithium metal phosphorous oxide and that of other carbon material are fusion-bonded with each other or these materials are uniformly dispersed and mixed. The negative electrode material of the battery contains the graphite-based carbon material (soft carbon) particles whose surfaces are coated with the amorphous carbon material. The organic electrolytic solution thereof consists of lithium hexafluorophosphate, serving as a supporting electrolyte, which is dissolved in an organic solvent. The separator thereof consists of woven cloth or nonwoven cloth made of resin. Moreover, the separator consists of glass fiber or cellulose fiber (patent document 3).

It is known that a through-hole having a projected portion is formed through a current collection foil of the lithium secondary battery (patent document 4).

It is known that as a nonaqueous electrolytic solution, a mixture of lithium imide salts and lithium hexafluorophosphate (hereinafter referred to as LiPF₆) is used (patent document 5).

Although the above-described devices of the items (1) and (2) enable the lithium secondary battery to be charged and discharged at a large current, it is difficult for the lithium secondary battery to be discharged at not less than 15 ItA when temperature is -30 degrees centigrade and charged at not less than 50 ItA. To allow the lithium secondary battery to have a high capacity, it is disadvantageous to alter the active substance of the negative electrode in (2) from the graphite material to the amorphous carbon material and is difficult to do so from the standpoint of weight saving which is important in using the lithium secondary battery for the ISS. The above-described target values can enhance the techniques for producing the lithium secondary battery for the ISS and in addition the techniques for producing batteries, having a large or high volume, which are developed to allow an HEV, a PHEV, and an EV to have a long travel distance in an electromotive drive without increasing the weight thereof.

Moreover, in the lithium secondary battery to be used for the ISS, it is also required to satisfy discharging at not less than 15 ItA when the temperature is -30 degrees centigrade and charging at not less than 50 ItA after being left for a predetermined time at -40 degrees centigrade. There is a problem in that it is difficult to satisfy the required property singly with a method of applying a predetermined pressure to the main surface of an electrode group.

### PRIOR ART DOCUMENTS

### PATENT DOCUMENTS

Patent document 1: Japanese Patent No. 3867030
Patent document 2: International Publication No. WO2011/049153
Patent document 3: International Publication No. WO2012/140790
Patent document 4: Japanese Patent Application Laid-Open Publication No. 6-314566
Patent document 5: Japanese Patent Application Laid-Open Publication No. 2014-7052

### SUMMARY OF THE INVENTION

### PROBLEMS TO BE SOLVED BY THE INVENTION

The present invention has been made to deal with the above-described problems. It is an object of the present invention to provide an electrochemical device such as a lithium secondary battery which can be discharged at -30 degrees centigrade and quickly charged at 25 degrees centigrade after being left for a predetermined time at -40 degrees centigrade and specifically a lithium secondary battery for an ISS in which discharge at not less than 15 ItA when the temperature is -30 degrees centigrade and charge at not less than 50 ItA can be retained for a long time.

### MEANS FOR SOLVING THE PROBLEM

The present invention provides an electrochemical device which can be discharged at -30 degrees centigrade and quickly charged at room temperature such as in the vicinity of 25 degrees centigrade by repeatedly occluding and releasing lithium ions in a construction in which an organic electrolytic solution is permeated into a wound or stacked electrode group or the electrode group is immersed in the organic electrolytic solution with a separator interposed between a positive electrode in which a positive electrode material is formed on the surface of a metal foil and a negative electrode in which a negative electrode material is formed on the surface of a metal foil.

This electrochemical device has the following characteristics.
(1) A pressure of 0.3 kgf/cm² to 1.1 kgf/cm² is applied to a main surface of an electrode group including the positive and negative electrodes.
(2) The positive electrode material consists of a mixture of lithium-containing compound particles whose surfaces are coated with an amorphous carbon material and a conductive carbon material in which the surface carbon atoms thereof are chemically bonded to one another, or the lithium-containing compound particles and the conductive carbon material are uniformly dispersed and mixed. Particularly, the lithium-containing compound is a lithium-containing metal phosphate compound. Moreover, the conductive carbon material has at least one selected from among carbon black, a carbon nanotube, and a graphene material in which a plurality of sheets of single-layer graphene are stacked.
(3) The negative electrode material contains at least one kind of particles selected from among graphite particles having a specific surface area of not less than 5 m²/g and soft carbon particles and the conductive carbon material, in which the graphite particles are coated with an amorphous carbon material and the surface carbon atoms of the graphite particles and those of the conductive carbon material are chemically bonded to one another or the graphite particles and the conductive carbon material are uniformly dispersed and mixed. Moreover, the conductive carbon material has at least one selected from among carbon black, a carbon nanotube, and a graphene material in which a plurality of sheets of single-layer graphene are stacked.
(4) The metal foil has a plurality of through-holes, formed therethrough, each having a projected portion on at least one surface thereof.
(5) The organic electrolytic solution consists of an organic solvent and a mixed electrolyte dissolved therein. The mixed electrolyte contains LiPF₆ and lithium bis(fluorosulfonyl)imide (hereinafter referred to as LiFSI). Moreover, the mixing ratio of LiPF₆ and LiFSI in the mixed electrolyte is set to (LiPF₆/LiFSI) = (1/0.2) to (0.4/0.8). Moreover, the organic solvent is a mixed carbonic acid ester including at least one from among ethylene carbonate, methyl ethyl carbonate, and dimethyl carbonate.
(6) The separator is made of at least one selected from among woven cloth, nonwoven cloth, and paper. Moreover, the separator made of nonwoven cloth is cellulose fibrous nonwoven cloth or polytetrafluoroethylene fibrous nonwoven cloth and the paper is obtained by paper-making after beating regenerated cellulose fiber.

As to the electrode group in which pressure is applied to the main surface thereof, (a) when a total thickness or a group diameter when the electrode group is produced before being stored in a case is set to L₁ and a length between the opposing inner wall faces of the case is set to L₀, the electrode group is designed so as to satisfy L₁>L₀ and the pressure is applied to the main surface of the electrode group by a restoring force of the separator after the electrode group is stored in the case using the cushioning action of the separator capable of being compressed or (b) the pressure is applied to the main surface of the electrode group by tightening the entire electrode group with a tape.

The electrochemical device of the present invention is a lithium secondary battery or a lithium ion capacitor.

### EFFECTS OF THE INVENTION

The separator used in the electrochemical device of the present invention is made of at least one selected from among woven cloth and nonwoven cloth. Therefore, it is easier for the separator of the present invention to act as a cushioning body so that a contact with the electrode surface follows the expansion and contraction of the electrode during charging and discharging, compared to a film separator made of a synthetic resin. Moreover, as a pressure of 0.3 kgf/cm² to 1.1 kgf/cm² is applied via the separator to the positive and negative electrode surfaces which are respectively opposed, the electrolytic solution moves more easily. Furthermore, since the positive and negative electrode materials and the organic electrolytic solution which is a mixed electrolyte containing LiPF₆ and LiFSI and in which particularly, the mixing ratio thereof is set to (LiPF₆/LiFSI) = (1/0.2) to (0.4/0.8), are specifically set, the electrochemical device has an excellent low temperature property. As a result, a long service life of the electrochemical device durable to severe use such as a low-temperature operation and a quick charging can be expected.

In the electrochemical device of the present invention, particularly the lithium secondary battery, the positive and negative electrodes in which the specific positive and negative electrode materials described above are formed on the metal foil having a plurality of through-holes, each having a projected portion, the specific organic electrolytic solution, and the specific separator are combined. Therefore, unlike conventional batteries, the electrochemical device of the present invention can be discharged at not less than 15 ItA when the temperature is -30 degrees centigrade and can be charged at not less than 50 ItA, and furthermore, is able to have a service life thereof about twice as long as a service life of the lead acid battery for the ISS.

### BRIEF DESCRIPTION OF THE DRAWINGS

Fig. 1 is a perspective view showing a configuration of a square lithium secondary battery.
Fig. 2 is a sectional view in a direction of applying pressure to an electrode group.
Fig. 3 is a plan view in a direction of applying pressure to an electrode group.
Fig. 4 is a sectional view of a metal foil having a plurality of through-holes.
Fig. 5 is views of "Cold-cranking specification" test results of an electrical test of LV124.

### MODE FOR CARRYING OUT THE INVENTION

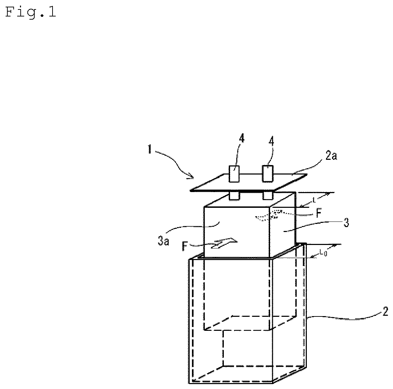

As one example of an electrochemical device of the present invention, an example of a square lithium secondary batter is described below with reference to Fig. 1. Fig. 1 is a perspective view showing a configuration of a lithium secondary battery.

As shown in Fig. 1, in a lithium secondary battery 1, an electrode group 3 in which a total thickness thereof is set to L is stored in a case 2 in which a length between opposing inner wall faces is set to L₀ and tabs 4 for the positive and negative electrodes which are electrically connected to the electrode group 3 are drawn out to the outside of the case from an upper part 2a portion of a main body of the case. The lithium secondary battery 1 is obtained by storing the electrode group 3 in the case 2 and sealing by the upper part 2a of the main body of the case. Lithium ions are repeatedly occluded and released in a construction in which the organic electrolytic solution is permeated into the electrode group 3 or the electrode group 3 is immersed in the organic electrolytic solution. The present invention is also applied to a lithium ion capacitor.

In the present invention, the separator used in the electrode group 3 is made of woven cloth, nonwoven cloth, or paper obtained by paper-making after beating regenerated cellulose fiber and pressure F to a main surface 3a of the electrode group 3 is 0.3 kgf/cm² to 1.1 kgf/cm² and preferably 0.8 kgf/cm² to 1.0 kgf/cm².

When the pressure F is less than 0.3 kgf/cm², the internal resistance of a battery increases so there is a possibility of a loss of discharge capacity, and when the pressure F exceeds 1.1 kgf/cm², an internal short circuit is easily generated between electrodes.

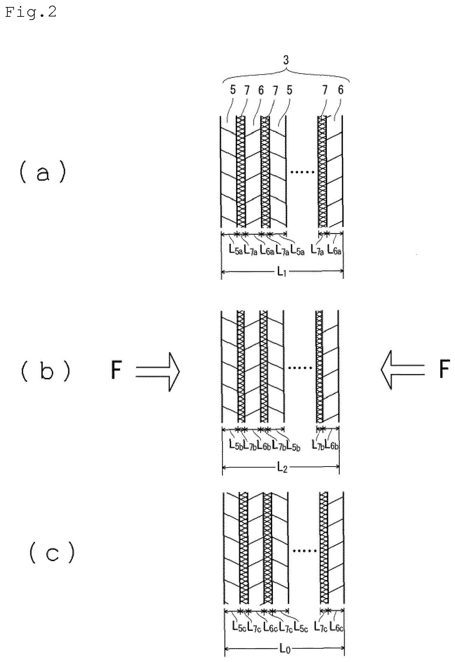

A preferable method for generating the pressure to the main surface 3a of the electrode group 3 is described with reference to Fig. 2. Fig. 2 is a sectional view in a direction of applying the pressure F to the electrode group 3, Fig. 2(a) is a view showing a total thickness when producing the electrode group, Fig. 2(b) is a view showing a state in which the electrode group is compressed in order to be stored in the case, and Fig. 2(c) is a view showing a thickness of the electrode group after being stored in the case.

In the electrode group 3, a positive electrode 5 and a negative electrode 6 are mutually stacked with a separator 7 interposed between the positive electrode 5 and the negative electrode 6. When a total thickness when the electrode group 3 is produced before being stored in the case 2 is set to L₁ and a length between opposing inner wall faces of the case 2 shown in Fig. 1 is set to L₀, the electrode group 3 is designed so as to satisfy L₁ > L₀ (Fig. 2(a)).

As shown in Fig. 2(a), when the thickness of a section of the positive electrode 5 is set to L₅ₐ, the thickness of a section of the negative electrode 6 is set to L₆ₐ, and the thickness of a section of the separator 7 is set to L₇ₐ, the thickness of the electrode group 3 becomes L₁ by these mutually being stacked. Here, as to L₅ₐ and L₆ₐ, the electrodes consist of the metal foil and a solid active substance, so even if the pressure is applied to the main surface 3a of the electrode group, a ratio in which the thicknesses become thinner is small. In contrast, L₇ₐ is the thickness of a section of the separator made of woven cloth, nonwoven cloth, or the like, so when the pressure F is applied, the separator becomes easier to be compressed due to a cushioning action by woven cloth, nonwoven cloth, or the like, compared to a separator made of a film. That is, even if the pressure F is applied, the length of L₅ₐ is substantially L_{5b} and the length of L₆ₐ is substantially L_{6b}. In contrast, when the pressure F is applied, L_{7b} becomes shorter than L₇ₐ.

Therefore, even if the thickness of electrode group 3 is L₁, the thickness of a section of the separator 7 becomes thinner by applying the pressure F in a direction of the thickness of the main surface 3a of the electrode group, and thus the thickness of the electrode group 3 becomes L₂₍Fig. 2(b)). The electrode group 3 can be stored in the case 2 by compressing the electrode group 3 so as to be L₂ < L₀ Moreover, even if L₂ and L₀ are the same, the electrode group 3 can be stored in the case 2 by slightly deforming the case 2.

A method of applying the pressure F in a direction of the thickness of the main surface 3a of the electrode group may be a method capable of setting to L₂ < L₀ and there are methods of using a clearance between the inner walls of the case 2 and the like.

This method using a clearance between the inner walls of the case 2 is a method of applying pressure to the electrode group by a restoring force of the separator 7.

Although the electrode group 3 is compressed to L₂ < L₀ by a compressor or the like and is stored in the case 2 immediately after being compressed, and the thickness of the electrode group tries to become the thickness of a section L₁ when being produced by a restoring force of the separator 7, the thickness of the electrode group cannot be not less than a length between opposing inner wall faces of the case 2 in which the electrode group is stored, therefore the thickness of the electrode group 3 becomes L₀ (Fig. 2(c)). The pressure is applied to the main surface of the electrode group 3 by the restoring force.

In the present invention, a pressure of 0.3 kgf/cm² to 1.1 kgf/cm² and preferably 0.8 kgf/cm² to 1.0 kgf/cm² is applied to the main surface of the electrode group 3 by adjusting the kind, the thickness, and the like of the separator 7.

For example, in a case of using the separator made of cellulose fiber or the like, the whole thickness of a section of the electrode group 3 is compressed, a pressure of 0.3 kgf/cm² to 1.1 kgf/cm² is applied thereto, and the electrode group 3 is inserted into the case, whereby the lithium secondary battery is assembled. The pressure can be controlled by a pressure sensor, a thickness reduction rate of the electrode group when the electrode group is put in a pouch type cell to reduce the pressure inside thereof, or the like.

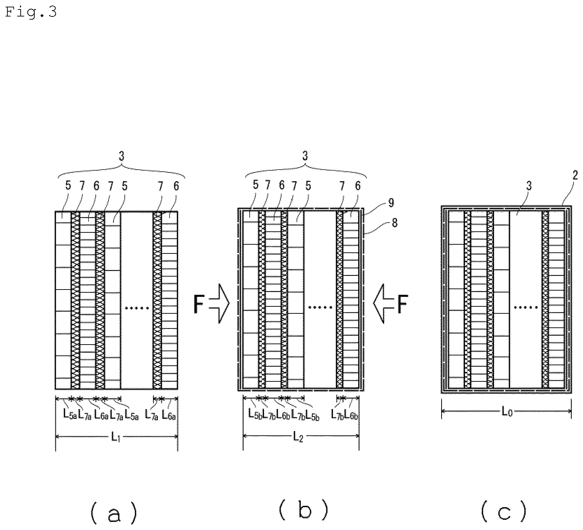

As another method of applying the pressure F in a direction of the thickness of the main surface 3a of the electrode group, for example, there is a method in which the electrode group as shown in Fig. 3 is wound with tapes. Fig. 3 is a plan view in a direction of applying the pressure F to the electrode group 3, Fig. 3(a) is a view showing a total thickness when producing the electrode group, Fig. 3(b) is a view showing a state in which the electrode group is compressed by winding the electrode group with tapes when producing the electrode group, and Fig. 3(c) is a view showing a state in which the electrode group is stored in the case.

In the electrode group 3, the positive electrode 5 and the negative electrode 6 are mutually stacked with a separator 7 interposed between the positive electrode 5 and the negative electrode 6. As to the electrode group 3, the total thickness of electrode group 3 before being stored in the case 2 is L₁. L₁ is a thickness when a plurality of the positive electrodes 5 having a thickness of L₅ₐ, the negative electrodes 6 having a thickness of L₆ₐ, and the separators 7 having a thickness of L₇ₐ are respectively stacked (Fig. 3(a)).

The electrode group 3 is tightened by winding around the electrode group 3 with a tape 8 in a direction F of compressing the total thickness L₁ of the electrode group 3(Fig. 3(b)). The thickness L₅ₐ of the positive electrode 5 becomes L_{5b} by tightening and in the same way, L₆ₐ becomes L_{6b}, and L₇ₐ becomes L_{7b}, and thus the total thickness of the electrode group 3 becomes L₂ and the electrode group 3 is compressed. As a tape, an adhesive tape and the like can be used. In a case where the electrode group is tightened by winding around the electrode group, a tightening auxiliary plate 9 is preferably disposed on a face in a direction F of compressing. The tightening auxiliary plate 9 having a stronger folding rigidity than that of the electrode group 3 is preferably used and a tightening force can be uniformly imparted to the direction F of compressing by the action of the tightening auxiliary plate 9.

The electrode group 3 tightened by winding around the electrode group 3 using the tape 8 is stored in the case 2 as it is (Fig. 3(c)). The thickness L₀ of the case 2 in a direction of the total thickness L₁ of the electrode group 3 is designed so as to satisfy L₁ > L₀ and L₂ < L₀.

The separator which can be used in the present invention electrically insulates the positive and negative electrodes from each other, holds an electrolytic solution, and is made of any one of woven cloth, nonwoven cloth, and paper having a restoring force even if the electrode group is compressed to some extent when the electrode group is produced.

Examples of woven cloth or nonwoven cloth include woven cloth, nonwoven cloth, and the like made of synthetic fiber, inorganic fiber, or the like.

Examples of the synthetic fiber include polyolefin fiber such as polypropylene and polyethylene, polyester fiber, polyamide fiber, vinyl chloride fiber, polyphenylene sulfide fiber, wholly aromatic polyester fiber, polyparaphenylene benzobisoxazole fiber, aromatic polyamide fiber, semi-aromatic polyamide fiber, polyimide fiber, polyamideimide fiber, melamine fiber, polybenzimidazole fiber, polyketone (polyether ether ketone and the like) fiber, polyacrylonitrile fiber, polyvinyl alcohol fiber, polyacetal fiber, polytetrafluoroethylene fiber, polyvinylidene fluoride fiber, other fluoropolymer fibers, cellulose fiber, and cellulose modified body (carboxymethyl cellulose and the like) fiber.

Examples of the inorganic fiber include a fibrous material and a whisker of silica, alumina, titanium dioxide, barium titanate, alumina-silica composite oxides, silicon carbide, zirconia, glass, and the like as well as substances derived from mineral resources such as talc, clay such as montmorillonite, boehmite, zeolite, apatite, kaolin, mullite, spinel, olivine, sericite, bentonite, and mica, and an artificial material of these.

Among those, cellulose fibrous nonwoven cloth or polytetrafluoroethylene fibrous nonwoven cloth is preferable.

The paper is obtained by paper-making after beating regenerated cellulose fiber. Examples of regenerated cellulose fiber include regenerated cellulose fiber having a high degree of polymerization (polynosic rayon) produced by low acid solvent spinning, and a solvent spinning rayon using an amine and oxide-based organic solvent. In order to prevent a short circuit between the positive and negative electrodes and the like when regenerated cellulose fiber is used in the separator, it is preferable to beat these fibers by a beating machine to increase the density of a fiber layer. By Beating, the fiber layer has a high density, and has an excellent tensile strength and ion permeability. However, when the density thereof becomes too high, voids among fibers decrease and the predetermined void ratio cannot be kept, therefore a beating degree (JIS P8121) thereof is set to a range to secure the void ratio of the present invention. Moreover, the beaten fiber and other fibers can also be mixed to be used. As to the paper, the fiber described above is used as a raw material and, for example, paper can be produced by paper-making using a paper machine of fourdrinier type, short-fourdrinier type, cylinder type, and the like. Moreover, the fiber layers having different void ratios are superimposed and combined using a fourdrinier and cylinder combination paper machine and the like in which the fourdrinier type and the cylinder type are combined and the like, and thus adhesion between the fiber layers is excellent.

The thickness of the separator which can be used in the present invention can be appropriately selected according to the kind and application of the electrochemical device, is preferably 10 µm to 100 µm, and more preferably 15 µm to 50 µm.

Moreover, the void ratio is preferably 50% to 95% and more preferably 65% to 80%. Here, the void ratio is a value calculated by a formula such as void ratio (%) = [1 - (M/T)/D] × 100 in which M, T, and D respectively represent a basis weight (g/cm²), a thickness (µm), and a polymer density (g/cm³).

As to the separator which can be used in the present invention, the fiber layers having different void ratios can be stacked. For example, a structure in which the void ratio of the fiber layer on the interface side with a negative electrode plate is smaller than the void ratio of the fiber layer on the interface side with a positive electrode plate is preferable. "The void ratio of the fiber layer on the interface side with a negative electrode plate is smaller than the void ratio of the fiber layer on the interface side with a positive electrode plate." means in focusing on two arbitrary layers configuring the separator, when these two layers are distinguished into the interface side of the positive electrode and the interface side of the negative electrode according to the positional relation with the electrode plates, the void ratio of the fiber layer on the interface side of the negative electrode is smaller than the void ratio of the fiber layer on the interface side of the positive electrode. That is, the separator has a structure in which, as the fiber layer is closer to the negative electrode plate, the void ratio thereof is smaller and as the fiber layer is closer to the positive electrode plate, the void ratio thereof is larger. Dendrite deposition and growth due to metallic lithium on a surface of the negative electrode can be suppressed at the time of large current charging and discharging, particularly, during charging by the fiber layer having a low void ratio being directed toward the negative electrode plate side, and as a result of this, a short circuit inside the battery can be prevented.

The void ratio of the separator in which two layers are superimposed may be in a range to secure not less than 50% as an average void ratio in the entire separator as described above. As a specific range, it is preferable that the void ratio of a fiber layer A which is adjacent to the negative electrode plate and configures the interface with the negative electrode plate is 40% to 80% and the void ratio of a fiber layer B which is adjacent to the positive electrode plate and configures the interface with the positive electrode plate is 60% to 90%. By setting the void ratio to within this range, the mobility state of lithium ions on the interfaces of the positive and negative electrodes during charging and discharging can be retained. Moreover, when the void ratio of the fiber layer A exceeds 80%, there is a possibility that dendrite deposition and growth cannot be suppressed. Moreover, when the void ratio of the fiber layer A is less than 40%, a liquid retention amount of the organic electrolytic solution decreases, compared to a case in which the void ratio thereof is larger than 40%, so there is a possibility of a liquid shortage in a small number of cycles. The void ratio of the fiber layer B is preferably higher, but when the void ratio thereof exceeds 90%, there is a possibility of it actually becoming unusable due to a decrease in tensile strength. Moreover, it is more preferable that the void ratio of the fiber layer A is 50% to 60% and the void ratio of the fiber layer B is 70% to 80%. By setting the void ratio of the fiber layer A in which the void ratio becomes the smallest to not less than 50% and setting the void ratios of all the other fiber layers to not less than 50%, a liquid retention amount of the organic electrolytic solution increases and it becomes easier to prevent a liquid shortage.

One example of members other than the separator used in the electrochemical device of the present invention is described below.

The positive electrode material occludes and releases lithium ions. The positive electrode material consists of a mixture of lithium-containing compound particles whose surfaces are coated with an amorphous carbon material and a conductive carbon material. Atoms of these surface carbon materials are chemically bonded to one another. Alternatively, the lithium-containing compound particles and the conductive carbon material are uniformly dispersed and mixed. The conductive carbon material has carbon black, a carbon nanotube, a graphene or a mixture thereof. Moreover, the surface carbon atoms are chemically bonded to one another by mixing each carbon material with a fluororesin and at least one substance selected from solvents which generate carbon by thermal decomposition and baking a mixture at not less than a temperature at which the substance is thermally decomposed. As a fluororesin, polyvinylidene fluoride (PVDF) is preferable. As a solvent which generates carbon by thermal decomposition, ethyl alcohol and the like are preferable. As a baking temperature for chemically bonding the surface carbon atoms to one another, it is preferable that the temperature is about 350 degrees centigrade in a case of using PVDF and the temperature is 750 degrees centigrade or less in a case of using ethyl alcohol and the like.

Examples of the lithium-containing compound include a lithium-containing metal oxide having a laminated or spinel structure and a solid solution thereof, a lithium-containing metal phosphate compound and lithium-containing metal silicate having an olivine structure and a fluoride thereof, and a lithium-containing compound of sulfur or the like.

Examples of the lithium-containing metal oxide having a laminated or spinel structure include LiCoO₂, Li(Ni/Co/Mn)O₂, and LiMn₂O₄, examples of the solid solution include Li₂MnO₃ - LiMO₂(M = Ni, Co, Mn), examples of the lithium-containing metal phosphate compound include LiFePO₄, LiCoPO₄, and LiMnPO₄, and examples of the silicate include LiFeSiO₄. In addition, examples of the fluoride include Li₂FePO₄.F. Examples of the lithium-containing compound includes LiS₄, LiTi₂(PO₄)₃, and LiFeO₂. Among those, the lithium-containing metal phosphate compound is preferable and it is particularly preferable to use LiFePO₄ which is an olivine-type lithium-containing metal phosphate compound in terms of its electrochemical property, safety, and cost.

The amorphous carbon material has at least one phase selected from among a graphene phase and an amorphous phase as its surface layer. The graphene phase means one layer of a planar six-membered ring structure of sp² bonded carbon atoms. The amorphous phase means the three-dimensionally constructed six-membered ring structure. The graphene phase and the amorphous phase are formed on the surface of the conductive carbon material. The chemical bonding of the surface carbon atoms means that the atoms of the surface carbon materials are bonded to one another owing to the turbulence of the graphene layer and/or the amorphous layer.

As the method of coating the surfaces of the lithium-containing metal phosphate compound particles with the amorphous carbon material, after the lithium-containing metal phosphate compound particles are treated with a gas or a liquid containing hydrocarbon, the treated substance is baked in a reducing atmosphere. The amorphous carbon material is in close contact with the surfaces of the lithium-containing metal phosphate compound particles. The thickness of the coating layer consisting of the amorphous carbon material is set to 1 nm to 10 nm and preferably 2 nm to 5 nm. In the case where the thickness of the coating layer consisting of the amorphous carbon material is not less than 10 nm, the surface-coating layer is thick and the lithium ions diffuse to a low degree to the surface of an active substance serving as a reaction portion of the battery. As a result, the battery has a deteriorated high output property.

As the conductive carbon material, at least one conductive carbon material selected from among conductive carbon powder and conductive carbon fiber is preferable.

As the conductive carbon powder, at least one conductive carbon powder selected from among acetylene black, Ketjen black, and powder containing graphite crystal is preferable.

As the conductive carbon fiber, at least one kind selected from among carbon fiber, graphite fiber, vapor-grown carbon fiber, carbon nanofiber, and carbon nanotube is preferable. The diameter of the carbon fiber is favorably 5 nm to 200 nm and more favorably 10 nm to 100 nm. The length of the carbon fiber is favorably 100 nm to 50 µm and more favorably 1 µm to 30 µm.

As the conductive carbon material, it is also possible to choose to include a graphene material in which a plurality of sheets of single-layer graphene are stacked. Since the graphene material has a high conductive performance as well as has a thin flaky shape, the conductive path can be increased. It is therefore preferable to mix the graphene material in the conductive carbon material. The graphene material can be produced by an oxidation-reduction method of producing by a reduction reaction and the like after obtaining a graphite oxide or a graphite oxide by subjecting a natural graphite to an oxidation process. Supposing that the entire conductive carbon material is 100 mass%, 0.5 mass% to 2.0 mass% and preferably 0.8 mass% to 1.2 mass% of the graphene material can be mixed.

In addition, regarding the mixing ratio of the conductive carbon material which may contain the graphene material, 1 mass% to 12 mass% and preferably 4 mass% to 10 mass% of the conductive carbon material can be mixed with the graphene material, supposing that the entire material composing the positive electrode material is 100 mass%.

In the mixture of the lithium-containing metal phosphate compound particles whose surfaces are coated with the amorphous carbon material and the conductive carbon material, the surface carbon atoms are chemically bonded to one another by baking the mixture in the reducing atmosphere.

The lithium-containing compound particles and the conductive carbon material are uniformly dispersed and mixed by mechanically mixing using equipment such as a disperser.

The negative electrode material occludes and releases lithium ions and consists of (1) graphite particles having a specific surface area of not less than 5 m²/g, (2) soft carbon particles, or (3) the combination of these particles. Particularly, the amorphous carbon material layer is formed on the surface of (1) graphite particles, and furthermore, the conductive particles of the carbon material or the conductive material of fiber and the like are mixed therewith.

As the graphite particle having the specific surface area of not less than 5 m²/g, artificial graphite or a graphite-based carbon material including natural graphite are exemplified.

The soft carbon particle allows a hexagonal network plane constructed of carbon atoms, namely, a graphite structure where the graphene phases are regularly layered one upon another to be easily developed on the surface thereof when the soft carbon particle is heat-treated in an inert atmosphere or a reducing atmosphere.

It is preferable that the average particle diameter of the graphite negative electrode material is 5 to 15 µm. The mixing ratio of the negative electrode material to the entire material composing the negative electrode material is 60 mass% to 95 mass% and preferably 90 mass% to 95 mass%.

As materials for the negative electrode material, it is preferable to use the conductive carbon powder and the conductive carbon fiber in combination. The mixing ratio therebetween is set to preferably [conductive carbon powder/conductive carbon fiber = (0.5 to 2)/(0.5 to 2)] in mass ratio.

It is possible to use 0.5 mass% to 4 mass%, preferably 2 mass% to 3 mass% of the conductive material for the mixing ratio of the negative electrode material.

The surface carbon atoms of the particles composing the negative electrode material are chemically bonded to one another by mixing the mixture with a carbon material solvent such as pitch and tar and baking the mixture under a reducing atmosphere. Alternatively, without being chemically bonded by baking, the negative electrode material can also be obtained by mechanically and uniformly dispersing and mixing all materials composing the negative electrode material together with a binder.

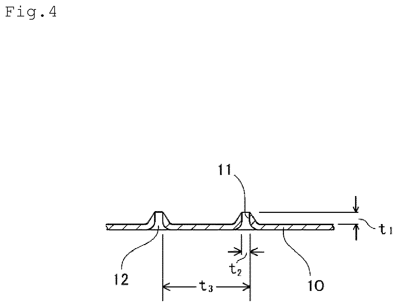

A metal foil serving as a current collector has a plurality of through-holes, formed therethrough, each having a projected portion on at least one surface thereof. Fig. 4 shows one example of the metal foil.

Fig. 4 is a sectional view of a metal foil having a plurality of through-holes each having a projected portion on a surface thereof. A metal foil 10 has a projected portion 11 formed around each through-hole 12. The through-hole 12 may be formed on the entire surface of the metal foil 10 or on a part of the surface thereof without forming the through-hole 12 on a flat portion of an unprojected surface thereof. It is preferable to form the through-hole 12 on a part of the surface of the metal foil in consideration of the strength of the metal foil serving as a current collection foil in producing the battery. It is especially preferable not to form the through-hole 12 and leave the flat portion at both widthwise ends of the current collection foil.

As the sectional configuration of the through-hole 12, it is possible to use pyramidal, cylindrical, conical configurations, and configurations formed in combinations of these configurations. The conical configuration is more favorable than the other configurations in view of a machining speed, the shot life of a machining jig, and the possibility of the generation of chips or peeled powders after the tip portion of the projected hole is machined.

It is preferable to form the through-hole 12 by breaking through the metal foil 10 to improve its current collection effect. The through-hole 12 formed by breaking through the metal foil 10 allows the lithium secondary battery to be charged and discharged at large electric current more excellently and have a higher durability against an internal short-circuit and the like at a charge/discharge cycle time than a through-hole, not having a projected portion, which is formed through the metal foil 10 by punching processing or irregularities formed thereon by emboss processing.

The through-hole 12 is circular and has a diameter t₂ of 50 µm to 150 µm. A height t₁ of the projected portion 11 is 50 µm to 400 µm. A distance t₃ between adjacent through-holes 12 is 300 µm to 2,000 µm. By distributing the through-holes in the above-described range, the entire through-hole-formed surface of the metal foil receives a contact pressure. Thus when the metal foil is wound by a winding roll in direct contact with the through-hole-formed surface thereof, the through-holes are prevented from being closed. Moreover, it is also effective for an object of this patent that the metal foil serving as the current collector has a conductive material layer having a thickness of 0.5 µm to 5 µm and preferably 1 µm to 3 µm on the layers of both surfaces thereof. The conductive material used is selected from at least one kind among carbon black, a graphite, and a graphene and a synthetic resin adhesive such as an acrylic resin, a polyimide and amide resin, and PVDF is used in order to form the conductive material layer.

An organic electrolytic solution consists of an organic solvent and a supporting electrolyte dissolved therein.

It is preferable that the organic solvent is mixed carbonic acid ester consisting of a plurality of carbonic acid esters mixed with one another. It is preferable that the mixed carbonic acid ester capable of constructing the lithium secondary battery which can be discharged at not less than 15 ItA when temperature is -30 degrees centigrade.

Examples of the carbonic acid esters include ethylene carbonate (EC), diethyl carbonate (DEC), dimethyl carbonate (DMC), and methyl ethyl carbonate (MEC). Mixed carbonic acid ester consisting of a mixture which does not freeze at -30 degrees centigrade is favorable. Mixed carbonic acid ester consisting of the ethylene carbonate (EC), the dimethyl carbonate (DMC), and the methyl ethyl carbonate (MEC) is more favorable.

The supporting electrolyte is a mixed electrolyte consisting of LiPF₆ and LiFSI mixed therewith.

The mixed electrolyte is dissolved in the organic solvent. The mixing ratio between the LiPF₆ and the LiFSI is set to preferably [LiPF₆/LiFSI = (1/0.2) to (0.4/0.8)]. It is preferable to set the total concentration of the supporting electrolyte to 1.0 mol to 1.3 mol.

The property of the battery was investigated by changing the addition amount of the LiFSI when the LiFSI was added to the LiPF₆. The DC resistance and capacity of the battery were measured by using a 3.4 V - 500 mAh laminate cell in an identical specification except that the mixing ratio between the LiPF₆ and the LiFSI was set to three levels, i.e., the electrolytic solution consisted of the LiPF₆, LiPF₆/LiFSI = 1/0.2, LiPF₆/LiFSI = 1/0.6. Table 1 shows the results. The ion conductance (mS/cm) of the LiPF₆ was 8.0 when it was used alone. The ion conductance (mS/cm) of the LiFSI was 10.0 when it was used alone. The viscosity (cP) of the LiPF₆ was 30 when it was used alone. The viscosity (cP) of the LiFSI was 20 when it was used alone.

**[Table 1]**

| Items of electrochemical property | LiPF₆ alone | 1 M - LiPF₆ + 0.2 M - LiFSI | 1 M - LiPF₆ + 0.2 M - LiFSI |
|---|---|---|---|
| DC resistance (mΩ) | 32.0 | 30.4 | 28.8 |
| Capacity (20 CA discharge, - 20°C) | 80 | 92 | 124 |

As shown in table 1, it has been found that by adding the LiFSI to the LiPF₆, the DC resistance of the battery is decreased and its capacity at low temperatures is improved.

The positive and negative electrodes used in the electrochemical device of the present invention can be produced through the processes: (1) producing a positive or negative electrode slurry by mixing an active substance of the positive or negative electrode, a conductive agent, and a binding agent, adding a dispersion solvent thereto, and mixing and (2) obtaining the positive or negative electrode by applying the positive electrode slurry and the negative electrode slurry respectively to the positive electrode plate and the negative electrode plate and drying. Here, a dispersion medium is preferably a polar solvent due to its capability of uniformly dispersing the active substance of the positive or negative electrode, the conductive agent, and the like. As the polar solvent, N-methyl-2-pyrrolidone which can be mixed with water at an arbitrary ratio or water can be used.

The case of the electrochemical device of the present invention is appropriately selected according to the kind, application, and shape of the electrochemical device, is not particularly limited as long as the material and the shape have a strength capable of applying pressure to the electrode group, and the cases using metals such as iron, stainless steel, and aluminum, a laminated body of metals and plastic films, or synthetic resins such as polypropylene and polycarbonate are exemplified.

The electrochemical device of the present invention includes a lithium ion secondary battery, a lithium ion capacitor, an electric double layer capacitor, and an electrolytic capacitor and these electrochemical devices can be used for portable telephones, personal computers, electric cars, hybrid cars, and an engine starter as a replacement for a 12 V lead acid battery. The lithium secondary battery of the present invention is composed in combination of the positive and negative electrodes, the electrode material and the conductive material composing these electrodes, the metal foil serving as the current collector, the organic electrolyte, and the separator. Thus the lithium secondary battery of the present invention is capable of satisfying the performance required to be used as the lithium secondary battery for the ISS.

### EXAMPLES

### Example 1

A lithium secondary battery which was one example of the electrochemical device was produced. Firstly, a positive electrode which can be used in the lithium secondary battery was produced in the following method.

Olivine-type lithium iron phosphate (LiFePO₄) whose surface was coated with amorphous carbon was used as an active substance of the positive electrode. As a conductive agent, 7.52 parts by mass of acetylene black and 1.88 parts by mass of carbon nanotube whose diameter was 15 nm were mixed with 84.6 parts by mass of the active substance of the positive electrode. The mixture was baked in a reducing atmosphere at 750 degrees centigrade for one hour to obtain a positive electrode material. As a binding agent, 6 parts by mass of polyvinylidene fluoride was added to the positive electrode material. As a dispersion solvent, N-methyl-2-pyrrolydone was added to the mixture. The mixture was kneaded to produce a positive electrode mixed agent (positive electrode slurry).

Projected portions each having a height of 100 µm were formed on both surfaces of an aluminum foil having a thickness of 20 µm. The positive electrode slurry was applied in a coating amount of 100 g/m² to both surfaces of the aluminum foil and dried. The diameter of through-holes formed through the aluminum foil was 80 µm. Thereafter the aluminum foil was pressed and cut to obtain the positive electrode for the lithium secondary battery. When the aluminum foil was pressed after the positive electrode slurry was applied to both surfaces thereof and dried, the total thickness of the positive electrode was 120 µm.

A negative electrode which can be used for the lithium secondary battery of the present invention was produced in the following way.

With 91.2 parts by mass of natural graphite particles whose surfaces were coated with an amorphous carbon material and which had a specific surface area of 8 m²/g, 4.8 parts by mass of soft carbon particles whose surfaces were coated with an amorphous carbon material was mixed. Thereafter 1 part by mass of acetylene black and 1 part by mass of a carbon nanotube were added to the mixture. The mixture was uniformly mixed to obtain the negative electrode material. As a binder, 2 parts by mass of SBR/CMC emulsion solution was added to the negative electrode material to produce slurry. After the slurry was applied to both surfaces of a copper foil having a thickness of 10 µm in a coating amount of 46 g/m² per one surface thereof, the slurry was dried. The copper foil was pressed and cut by adjusting the total thickness thereof to 72 µm to obtain the negative electrode.

The positive and negative electrodes produced as described above were used to produce a 3.4 V - 500 mAh square lithium secondary battery consisting of eight positive electrodes and nine negative electrodes. The square lithium secondary battery used a battery case in which a distance between inner faces in a face direction of applying pressure to vertical × horizontal × thickness × the electrode group was about 10 cm × 8 cm × 0.3 cm × 0.22 cm. As an electrolytic solution, 0.6 mol/L of lithium hexafluorophosphate (LiPF₆) and 0.6 mol/L of lithium bis fluorosulfonyl imide (LiSFI) were dissolved in a solution consisting of a mixture of EC solvent, MEC solvent, and DMC solvent. Moreover, the separator which was made of cellulose fiber and in which the void ratio was 70% and the thickness was 20 µm was used. As cellulose fiber, solvent spinning regenerated cellulose fiber was used and the fiber was beaten to the predetermined beating degree to obtain paper by paper-making.

After the positive and negative electrodes described above were used and stacked with the separator interposed between the positive and negative electrode plates and the electrolytic solution was injected thereto, a laminate film was thermally welded to produce a square cell. In Example 1, the electrode group was tightened with an adhesive tape so as to apply a pressure of 0.9 kgf/cm² to the electrode group and the separator.

After the lithium secondary battery obtained in the example 1 was initially charged and its capacity was checked, a discharged DCR value and a charged DCR value of the battery were measured when the charged amounts (SOC) thereof were 50%. Regarding a measuring method, each battery was so adjusted that the charged amount (SOC) thereof was 50% in the measurement of each of the discharged DCR value and the charged DCR value at a room temperature (25 degrees centigrade). Starting in an open circuit state, the voltage of each battery was measured in 10 seconds after the battery was discharged at electric currents of 1 ItA, 5 ItA, and 10 ItA to plot a voltage drop quantity with respect to the voltage of the open circuit each time the battery was discharged at each electric current. The inclination of a graph linearized by using a least squares method was set as the discharged DCR value in 10 seconds after the battery discharging started. In the case of charging each battery, in 10 seconds after the battery charging started, the charged DCR value of the battery was calculated from a graph obtained by plotting a rise amount of a charging voltage with respect to the voltage of the open circuit each time the battery whose charged amount (SOC) thereof was 50% was charged at electric currents of 1 ItA, 5 ItA, and 10 ItA. Thereafter at -30 degrees centigrade, the discharge duration of each battery down to 2.5 V was measured at electric currents of 15 ItA and 30 ItA for each battery capacity. To compare regenerative charging performances of the batteries with one another, after the discharged capacity of each battery down to 2.0 V was checked at a constant current of 1 ItA, the battery was subjected to a constant current charging up to 4.0 V at each of current value of 30 ItA, 50 ItA, and 80 ItA to calculate the ratio of a regenerative recovery charging capacity of the battery to the discharge capacity thereof at 1 ItA as a charge efficiency. The regenerative charging performances of the batteries were compared with one another based on the charge efficiency. The results are shown in tables 2, 3, and 4.

### Comparative Example 1

The olivine-type lithium iron phosphate (LiFePO₄) whose surface was coated with the amorphous carbon was used as the active substance of the positive electrode. As the conductive agent, after 7.52 parts by mass of the acetylene black and 1.88 parts by mass of the carbon nanotube whose diameter was 15 nm were mixed with 84.6 parts by mass of the active substance of the positive electrode to obtain the positive electrode material without baking the mixture. As the binding agent, 6 parts by mass of the polyvinylidene fluoride was added to the positive electrode material. As the dispersion solvent, the N-methyl-2-pyrrolydone was added to the mixture. The mixture was kneaded to produce the positive electrode mixed agent (positive electrode slurry).

The positive electrode slurry was applied to both surfaces of the aluminum foil having a thickness of 20 µm in a coating amount of 100 g/m² and dried. Thereafter the aluminum foil was pressed and cut to obtain the positive electrode for the lithium secondary battery. After the positive electrode slurry was applied to both faces of the planar aluminum foil not having a projected portion on the foil surface, dried and then pressed, the total thickness of the positive electrode was 120 µm.

In consideration of the precipitation of metal lithium on the active substance of a negative electrode when the battery was discharged and charged at a large current, a negative electrode material whose surface was not coated with the amorphous carbon was prepared. 4.8 parts by mass of the soft carbon particles was mixed with 91.2 parts by mass of the natural graphite particles having a specific surface area of 8 m²/g and an average particle diameter of about 5 µm. Thereafter 1 part by mass of the acetylene black and 1 part by mass of the carbon nanotube were added to the mixture. As the binder, 2 parts by mass of the SBR/CMC emulsion solution was added to the mixture to produce slurry. After the slurry was applied to both surfaces of the copper foil having a thickness of 10 µm in the coating amount of 46 g/m² per one surface thereof, the slurry was dried. After the copper foil was pressed and cut by adjusting the total thickness thereof to 72 µm, the negative electrode was obtained.

A lithium secondary battery of the comparative example 1 was produced in a way similar to that of the example 1 except that the positive and negative electrodes as described above were used. The performance of the lithium secondary battery of the comparative example 1 was evaluated in a way similar to that of the example 1. The results are shown in tables 2, 3, and 4.

### Comparative Example 2

A lithium secondary battery of a comparative example 2 was produced in a way similar to that of the example 1 except that as a supporting electrolyte of an electrolytic solution of the lithium secondary battery of the comparative example 2, only 1.2 M - LiPF₆ was used in the lithium secondary battery of the example 1. The performance of the lithium secondary battery of the comparative example 2 was evaluated in a way similar to that of the example 1. The results are shown in tables 2, 3, and 4.

### Comparative Example 3

A lithium secondary battery of a comparative example 3 was produced in a way similar to that of the example 1 except that as a separator of the lithium secondary battery of the comparative example 3, a polyethylene film having a thickness of 20 µm was used in the lithium secondary battery of the example 1. The performance of the lithium secondary battery of the comparative example 3 was evaluated in a way similar to that of the example 1. The results are shown in tables 2, 3, and 4.

### Comparative Example 4

A lithium secondary battery for conducting a test based on "Cold-cranking specification" was produced by the following method. The lithium secondary battery was produced in a way similar to that of the example 1 except that the positive and negative electrodes obtained in the comparative example 1 were used, as a supporting electrolyte of an electrolytic solution, only 1.2 M - LiPF₆ was used, and as a separator, a polyethylene film having a thickness of 20 µm was used.

**[Table 2]**

| | Discharged DCR value (mΩ) | Charged DCR value (mΩ) |
|---|---|---|
| Example 1 | 32 | 34 |
| Comparative example 1 | 150 | 137 |
| Comparative example 2 | 62 | 65 |
| Comparative example 3 | 74 | 74 |

Table 2 indicates that the lithium secondary battery of each of the example 1 had a much lower resistance value than the lithium secondary batteries of the comparative examples. Table 2 also indicates that although there was a difference in the effect among the lithium secondary batteries of the comparative examples 1, 2, and 3, these lithium secondary batteries are composed in the entire combination in which the positive and negative electrodes, the electrode material and the conductive material composing these electrodes, the metal foil serving as the current collector, the organic electrolyte, and the separator was not used. Therefore the performances of the lithium secondary batteries of the comparative examples 1, 2, and 3 were inferior to those of the lithium secondary battery of the example 1.

**[Table 3]**

| | 15 ItA discharge duration (second) | 30 ItA discharge duration (second) |
|---|---|---|
| Example 1 | 32 | 8 |
| Comparative example 1 | 0 | 0 |
| Comparative example 2 | 18 | 0 |
| Comparative example 3 | 11 | 0 |

Table 3 indicates that the lithium secondary battery of the example 1 could be discharged at 15 ItA and 30 ItA. Thus the lithium secondary battery of the example 1 is capable of substituting a lead acid battery for use in the idling stop system at -30 degrees centigrade. Table 3 also indicates that the lithium secondary batteries of the comparative examples 1, 2, and 3 were improved slightly, but incapable of operating at a low temperature of -30 degrees centigrade. Thus these batteries are incapable of substituting the lead acid battery.

**[Table 4]**

| | 30 ItA regenerative charging efficiency (%) | 50 ItA regenerative charging efficiency (%) | 80 ItA regenerative charging efficiency (%) |
|---|---|---|---|
| Example 1 | 87 | 59 | 17 |
| Comparative example 1 | 0 | 0 | 0 |
| Comparative example 2 | 43 | 15 | 0 |
| Comparative example 3 | 27 | 0 | 0 |

Table 4 indicates that the lithium secondary battery of the example 1 could be charged at an ultra high speed within one minute (charging at 80 ItA) at a room temperature (25 degrees centigrade). This is because the electric resistance of the entire lithium secondary battery of the example 1 became low, in addition, as an electrochemical mechanism, the specific surface area of the amorphous carbon material part of the positive electrode and particularly the amorphous carbon portion on the surface of the negative electrode became large, on which lithium ions were firstly adsorbed like a capacitor, which prevented metal lithium from precipitating. Thereafter the lithium ions were gradually inserted between the graphite-based carbon layers of the active substance of the inside by diffusion in a solid irrespective of a reaction speed corresponding to the charging current. On the other hand, in the lithium secondary battery of the comparative example 1, the charging reaction rate and the intercalation rate on the surface of the graphite of the negative electrode serving as the recipient of the lithium ions did not match each other and diffusion limitation occurred in the solid to cause the battery to polarize. As a result, the charging voltage reached 4.0 V early and applied a charging load to the battery. The positive and negative electrodes of the lithium secondary battery of the comparative examples 2 and 3 were similar to those of the example. But the diffusion capacities thereof were low owing to the difference in the supporting electrolyte for the lithium ion between the battery of the example and those of the comparative examples 2 and 3. In addition, the absolute amount of the lithium ion at the electrode interface was short owing to the shortage of the electrolytic solution-holding performance of the separator. Thus the batteries of the comparative examples 2 and 3 polarized similarly to the lithium secondary battery of the comparative example 1. The DCR values slightly decreased but these effects were superior to those of the comparative examples 1, 2, and 3, even though the positive electrode material in the example 1 was not formed by baking to be bonded and was formed in the specifications in which each composing material was uniformly dispersed and mixed. Although the influence of the positive electrode was seen slightly, contribution rates of the negative electrode, the electrolytic solution, the separator, and the perforated and projected foil, furthermore, the pressurization of the electrode group other than the positive electrode are all large, therefore it has been found that all combinations thereof are necessary.

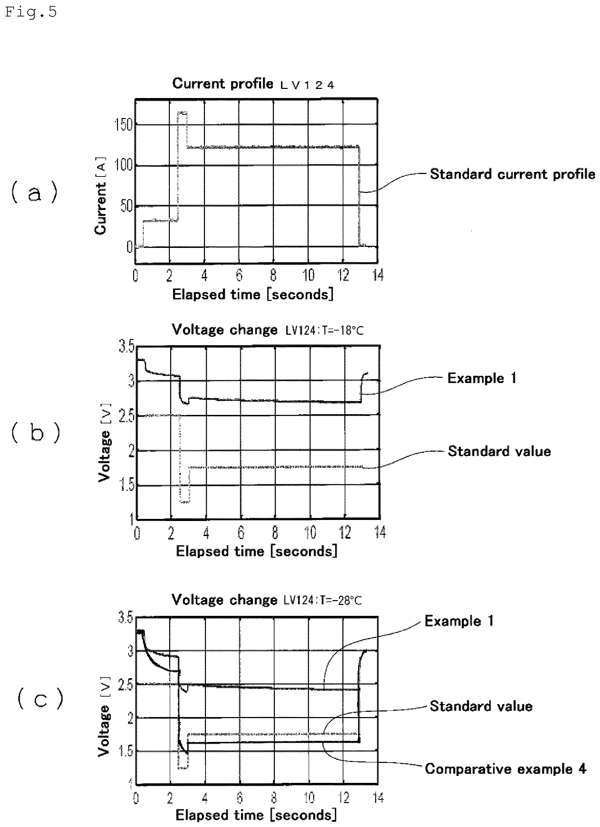

A 3.4 V - 14 Ah lithium secondary battery for mounting on a vehicle using the electrode in the same specifications of the example 1 and the comparative example 4 was prototyped and a test based on "Cold-cranking specification" which is specified by an automobile manufacture in Germany and is the severest regulation of an electrical test of LV124 of onboard equipment was conducted. As to the test conditions, at 70% of a charged state, a voltage change was measured when discharging at -18 degrees centigrade or -28 degrees centigrade. The result is shown in Fig. 5. When the example 1 is compared with the comparative example 4, it has been found that as to the voltage property at a low current value in the current profile (a) at early stage of the elapsed time during the operation, both voltage values were not lower than the standard value, but difference in voltage property thereof occurred in the profile at a relatively large current after the lapse of 3 seconds, and the voltage value in the example 1 exceeded the standard voltage whereas the voltage value in the comparative example 4 was below the standard voltage. Thus, it is thought to occur a difference in the voltage property thereof due to the combinations of all requirements of the positive and negative electrode plates, the current collection foil, the separator, the electrolytic solution of the present invention, and furthermore, appropriate pressurization of the electrode group.

### INDUSTRIAL APPLICABILITY

It has been found that the electrochemical device of the present invention can be discharged at not less than 15 ItA even when temperature is -30 degrees centigrade and has the performance capable of substituting the lead acid battery for use in the idling stop system and the performance surpassing that of the lead acid battery in that the battery of the present invention is capable of accomplishing regenerative charging at not less than 50 ItA. The lithium battery according to one embodiment of the present invention operates at a low temperature not only as a power source of the idling stop system but also as a power source for driving an HEV, a PHEV, and an EV. Furthermore, without increasing the capacity, volume, and weight of the battery of the present invention, the battery allows vehicles to extend an electric power traveling distance owing to its regenerative ability. Thus the battery of the present invention can be utilized for industrial batteries mounted on vehicles and the like having an effective performance for improving fuel efficiency.

### REFERENCE SIGNS LIST

- 1:: lithium secondary battery
- 2:: case
- 3:: electrode group
- 4:: tab for positive and negative electrodes
- 5:: positive electrode
- 6:: negative electrode
- 7:: separator
- 8:: tape
- 9:: tightening auxiliary plate
- 10:: metal foil
- 11:: projected portion
- 12:: through-hole

## Claims

1. An electrochemical device dischargeable at -30 degrees centigrade and quickly chargeable at 25 degrees centigrade by repeatedly occluding and releasing lithium ions in a construction in which an organic electrolytic solution is permeated into a wound or stacked electrode group or the electrode group is immersed in the organic electrolytic solution with a separator interposed between a positive electrode having a positive electrode material formed on a surface of a metal foil and a negative electrode having a negative electrode material formed on a surface of a metal foil, wherein:
a pressure of 0.3 kgf/cm² to 1.1 kgf/cm² is applied to a main surface of an electrode group including the positive and negative electrodes,
the positive electrode material consists of a mixture of lithium-containing compound particles whose surfaces are coated with an amorphous carbon material and a conductive carbon material in which the surface carbon atoms thereof are chemically bonded to one another, or the lithium-containing compound particles and the conductive carbon material are uniformly dispersed and mixed,
the negative electrode material contains at least one kind of particles selected from among graphite particles having a specific surface area of not less than 5 m²/g and soft carbon particles and the conductive carbon material, in which the graphite particles are coated with an amorphous carbon material and the surface carbon atoms of the graphite particles and those of the conductive carbon material are chemically bonded to one another or the graphite particles and the conductive carbon material are uniformly dispersed and mixed,
the metal foil has a plurality of through-holes, formed therethrough, each having a projected portion on at least one surface thereof,
the organic electrolytic solution consists of an organic solvent and a mixed electrolyte dissolved therein and the mixed electrolyte contains lithium hexafluorophosphate and lithium bis(fluorosulfonyl)imide, and
the separator is made of at least one selected from among woven cloth, nonwoven cloth, and paper.

2. The electrochemical device according to claim 1, wherein as to the electrode group, when a total thickness or a group diameter when the electrode group is produced before being stored in a case is set to L₁ and a length between opposing inner wall surfaces of the case is set to L₀, the electrode group is designed so as to satisfy L₁>L₀ and the pressure is applied to the main surface of the electrode group by a restoring force of the separator after the electrode group is stored in the case using a cushioning action of the separator capable of being compressed.

3. The electrochemical device according to claim 1, wherein the pressure is applied to the main surface of the electrode group by tightening the entire electrode group with a tape.

4. The electrochemical device according to claim 1, wherein the lithium-containing compound is a lithium-containing metal phosphate compound.

5. The electrochemical device according to claim 1, wherein the conductive carbon material has at least one selected from among carbon black, a carbon nanotube, and a graphene material in which a plurality of sheets of single-layer graphene are stacked.

6. The electrochemical device according to claim 1, wherein the surface carbon atoms are chemically bonded to one another by mixing each carbon material with a fluororesin and at least one substance selected from solvents which generate carbon by thermal decomposition and baking a mixture at not less than a temperature at which the substance is thermally decomposed to obtain a baked product.

7. The electrochemical device according to claim 1, wherein the separator includes fibrous nonwoven cloth having at least one of a hydrophilic group and oxide ceramics on a surface thereof.

8. The electrochemical device according to claim 1, wherein the nonwoven cloth is cellulose fibrous nonwoven cloth or polytetrafluoroethylene fibrous nonwoven cloth.

9. The electrochemical device according to claim 1, wherein the paper is obtained by paper-making after beating regenerated cellulose fiber.

10. The electrochemical device according to claim 1, wherein the organic solvent is a mixed carbonic acid ester.

11. The electrochemical device according to claim 10, wherein the mixed carbonic acid ester includes at least one from ethylene carbonate, methyl ethyl carbonate, and dimethyl carbonate.

12. The electrochemical device according to claim 1, wherein a mixing ratio of lithium hexafluorophosphate and lithium bis(fluorosulfonyl)imide in the mixed electrolyte is (lithium hexafluorophosphate/lithium bis(fluorosulfonyl)imide) = (1/0.2) to (0.4/0.8).

13. The electrochemical device according to claim 1, wherein the electrochemical device is a lithium secondary battery.

14. The electrochemical device according to claim 1, wherein the electrochemical device is a lithium ion capacitor.
